(19) Europäisches Patentamt
European Patent Office
Office européen des brevets

(11) Veröffentlichungsnummer : **0 172 940**
**B1**

(12) # EUROPÄISCHE PATENTSCHRIFT

(45) Veröffentlichungstag der Patentschrift : **15.03.89**

(51) Int. Cl.⁴ : **B 29 D 12/02**, G 02 C 5/00

(21) Anmeldenummer : **84113905.8**

(22) Anmeldetag : **16.11.84**

(54) **Brillengestell und Teile davon.**

(30) Priorität : **07.08.84 DE 3429074**

(43) Veröffentlichungstag der Anmeldung : **05.03.86 Patentblatt 86/10**

(45) Bekanntmachung des Hinweises auf die Patenterteilung : **15.03.89 Patentblatt 89/11**

(84) Benannte Vertragsstaaten : **AT BE CH DE FR GB IT LI LU NL SE**

(56) Entgegenhaltungen : **EP--A-- 0 174 392**

(73) Patentinhaber : **EYEMETRICS-SYSTEMS AG**
**Steinbockstrasse 4**
**CH-7001 Chur (CH)**

(72) Erfinder : **Czech, Günther**
**Heinrich-Hertz-Str. 4/1**
**D-7024 Filderstadt-4 (DE)**

(74) Vertreter : **Grams, Klaus Dieter, Dipl.-Ing. et al**
**Patentanwaltsbüro Tiedtke-Bühling-Kinne- Grupe-Pellmann-Grams-Struif Winter-Roth Bavariaring 4**
**D-8000 München 2 (DE)**

**EP 0 172 940 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf Brillengestelle und Teile davon, insbesondere Bügel, Backe und Brücke aus Kunststoff.

Die Verwendung von thermoplastischen Kunststoffen für die Herstellung von Brillengestellen und Teilen davon ist bekannt. So ist es bekannt, Brillengestelle und Teile davon aus Celluloseacetat und Cellulosebutyrat etwa durch Spritzgießen herzustellen. Solche Brillengestelle aus Celluloseacetat und Cellulosebutyrat lassen sich jedoch relativ leicht verformen.

In neuerer Zeit ist versucht worden, Brillengestelle und Teile davon aus anderen thermoplastischen Kunststoffen herzustellen. Hierzu werden spezielle Polyamide verwendet, die sich durch Spritzformen leicht verarbeiten lassen. Um diesen bekannten Polyamiden eine ausreichende Steifigkeit und Flexibilität zu verleihen, enthalten die beanspruchten Teile, insbesondere die Bügel Metalleinlagen.

Ferner sind in der DE-OS 26 11 019 Epoxid-Massen für die Herstellung von Brillengestellen und Teilen davon beschrieben. Epoxidharze gehören zu den duroplastischen Kunststoffen, die in der Form gehärtet werden können. Brillengestelle aus Epoxidharzen zeichnen sich durch eine relativ gute Biegefestigkeit und Formbeständigkeit aus.

Ferner ist es bekannt, Brillengestelle und Brillengestellteile aus Metallen herzustellen. Üblicherweise werden für die Herstellung spezielle Legierungen, etwa eine Chrom-Nickel-Legierung verwendet, die sich durch eine hohe Festigkeit und ein gutes Federungsvermögen auszeichnet. Brillengestelle aus Metall können daher stark beansprucht werden.

Aus der DE-A-30 17 691 ist ein teilchenförmiges, im wesentlichen von organischen Lösungsmittel freies Polyätherimid-Oligomeres bekannt, das durch Reaktion im wesentlichen gleicher molarer Mengen von aromatischen Bis (ätheranhydrid) und organischem Diamin unter wäßrig-organischen Grenzflächenbedingungen erhalten wird. Dieses bekannte Polyätherimid-Oligomer ist bis zu einem hohen Molekulargewichtszustand im Spritzguß gut ausformbar.

Der Erfindung liegt die Aufgabe zugrunde, Brillengestelle und Brillengestellteile davon aus Kunststoff zur Verfügung zu stellen, die feines dimensioniert werden können als bisherige Brillengestelle und Teile davon aus Kunststoff und die ein hohes Federrückstellvermögen haben, das über lange Zeitspannen im Gebrauch unverändert bleibt.

Diese Aufgabe wird durch die im Patentanspruch 1 genannten Kunststoffe gelöst.

Die als Kunststoffe verwendeten Polyätherimide zeichnen sich durch eine ausgezeichnete Kombination von Eigenschaften aus. Das Polyätherimid hat neben einer hohen Steifigkeit und Wärmeformbeständigkeit ein hohes Federrückstellvermögen, das demjenigen von Brillengestellmetallen ähnlich ist. Daher werden die Brillengestelle auch nach hoher mechanischer Beanspruchung nicht bleibend verformt. Das Brillengestell und dessen Teile sind besonders leicht und ermöglichen einen hohen Tragekomfort. Als thermoplastischer Kunststoff läßt sich das Polyätherimid in einfacher und wirtschaftlicher Weise spritzformen.

Bevorzugte Ausgestaltungen sind in den Unteransprüchen spezifiziert.

Polyätherimide sind ansich bekannte Kunststoffe, die speziell für die Entwicklung von Hochtemperaturmaterialien entwickelt wurden. So sind Polyätherimide beispielsweise in der DE-PS 24 16 595 und in der DE-OS 27 16 444 beschrieben. Ein für den Spritzguß geeignetes Polyätherimid ist in der DE-OS 30 17 691 beschrieben.

Ein bevorzugtes Polyätherimid ist aus folgenden wiederholenden Einheiten aufgebaut :

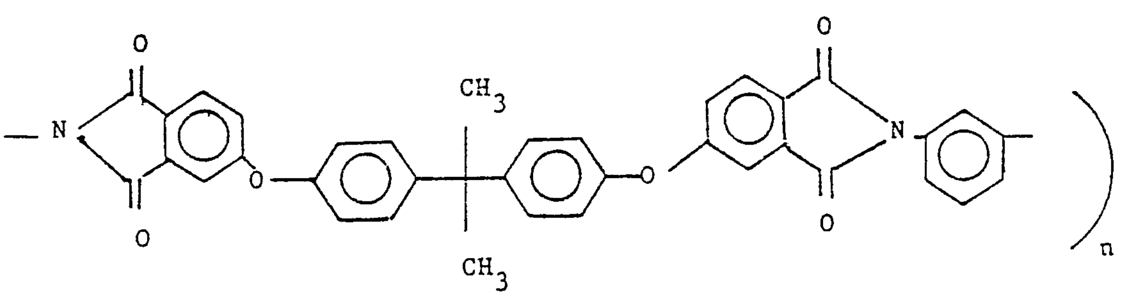

Dieses Polyätherimid ist ein stark gelblich, bernsteinfarbener transparenter thermoplastischer Kunststoff, das vorzugsweise eine Glastemperatur von 210 bis 230 °C, insbesondere 215 bis 220 °C aufweist. Ein geeignetes Polyätherimid hat folgende Eigenschaften.

Eine Zugfestigkeit, gemessen nach DIN 53455 von 90 bis 140 N/m², eine Dehnung bis zum Bruch, gemessen nach DIN 53455 von 40 bis 80 %, einen Biegemodul, gemessen nach DIN 53457 von 2 500 bis 5 000 N/mm², eine IZOD Kerbschlagzähigkeit, gemessen nach ASTM D 2566 von 30 bis 90 J/m, eine Glastemperatur von 210 bis 230 °C, eine Wärmeformbeständigkeit DTUL, gemessen bei 1,82 N/mm² nach ASTM D 648 von 190 bis 210 °C und eine Dichte, gemessen nach DIN 53479 von 1,10 bis 1,50 Mg/m³.

Ein besonders bevorzugter Werkstoff ist ein Polyätherimid mit folgenden Eigenschaften :

Eine Zugfestigkeit, gemessen nach DIN 53455 von 100 bis 110 N/mm², eine Dehnung bis zum Bruch, gemessen nach DIN 53455 von 55 bis 65 %, einem Biegemodul, gemessen nach DIN 53457 von 3 000 bis 3 500 N/mm³, eine IZOD Kerbschlagzähigkeit, gemessen nach ASTM D 256 von 40 bis 60 J/m, eine Glastemperatur von 215 bis 220 °C, eine Wärmeformbeständigkeit DTUL, gemessen nach ASTM D 648 von 195 bis 205 °C und eine Dichte, gemessen nach DIN 53479 von 1,25 bis 1,30 Mg/m³.

Geeignete Polyätherimidwerkstoffe sind in der Firmenbroschüre « Ultem », herausgegeben von General Electric Plastics Europe beschrieben. Ein besonders bevorzugter Werkstoff ist das im Handel erhältliche unverstärkte Polyätherimid « Ultem® 1000», das von General Electric geliefert wird. Jedoch können auch die verstärkten Typen eingesetzt werden.

Das Polyätherimid kann mit Glas- und/oder Kohlenstoffasern verstärkt sein, jedoch ist es vorzugsweise nicht verstärkt. Eine Verstärkung der Kunststoffe führt zwar zu einer Erhöhung der Steifigkeit, jedoch wird das erwünschte Federrückstellvermögen herabgesetzt.

Das Polyätherimid kann Zusätze, wie Metallpulver oder Farbpigmente enthalten, so daß das Brillengestell oder seine Teile mit einem gewünschten Farbton eingefärbt werden können. Die Oberfläche der beiden Kunststofftypen kann eingefärbt oder metallisiert sein. Die Metallisierung kann durch Galvanisierung, Plattierung oder Metallaufdampfung erfolgen.

Polyätherimide lassen sich leicht verarbeiten und insbesondere spritzformen. Polyätherimid läßt sich bei 350 bis 450 °C, insbesondere bei 380 bis 420 °C spritzformen. Die Spritzformtechnik zur Herstellung von Brillengestellen und Brillengestellteilen ist dem Fachmann allgemein geläufig, so daß insoweit keine Besonderheiten zu beachten sind.

Die Brillengestelle und deren Teile enthalten keinerlei stützende Metalleinlagen. Insbesondere enthalten stark beanspruchte Teile, wie Bügel keine Seele aus Metall.

Im nachstehenden wird die Erfindung durch ein Beispiel näher erläutert.

## Beispiel

Es wurde ein Brillenbügel aus Polyätherimid (Ultem® 1000, geliefert von der Firma General Electric) durch Spritzformen bei 400 °C hergestellt. Die Wandstärke des Bügels war etwas stärker dimensioniert als diejenige eines entsprechenden Metallbügels. Das Federrückstellvermögen des Brillenbügels wurde durch einen Dauerbelastungstest untersucht. Hierzu wurde der Bügel an seinem vorderen Ende fest eingespannt und das hintere Ende des Bügels wurde um 6 cm aus der Horizontalen ausgelenkt und in dieser ausgelenkten Stellung bestimmte Zeitspannen gehalten. Nach bestimmten Zeitspannen wurde der Bügel zurückfedern gelassen und es wurde die Auslenkung von der Horizontalen gemessen, was ein Maß für das Federrückstellvermögen des Bügels darstellt. Es wurde gefunden, daß ein Brillenbügel aus Polyätherimid nach mehreren Wochen Langer Ausdehnung in den ursprünglichen Zustand zurückkehrte, so daß kein Verlust des Federungsvermögens eintrat.

Ferner wurden Brillenbügel aus Polyamid, Polycarbonat, Celluloseacetat, Cellulosebutyrat, Epoxidharzen und anderen hochwertigen Kunststoffen untersucht. Sämtliche anderen getesteten Kunststoffe zeigten nicht das Federrückstellvermögen des Polyätherimids. Nach relativ kurzen Zeitspannen wurde eine bleibende Verformung des Brillenbügels beobachtet.

## Patentansprüche

1. Brillengestelle und Teile davon aus Kunststoff, dadurch gekennzeichnet, daß sie aus spritzgeformtem Polyätherimid bestehen und daß sie frei von stützenden Metalleinlagen sind.

2. Brillengestelle und Teile davon nach Anspruch 1, dadurch gekennzeichnet, daß das Polyätherimid folgende wiederholende Einheit aufweist :

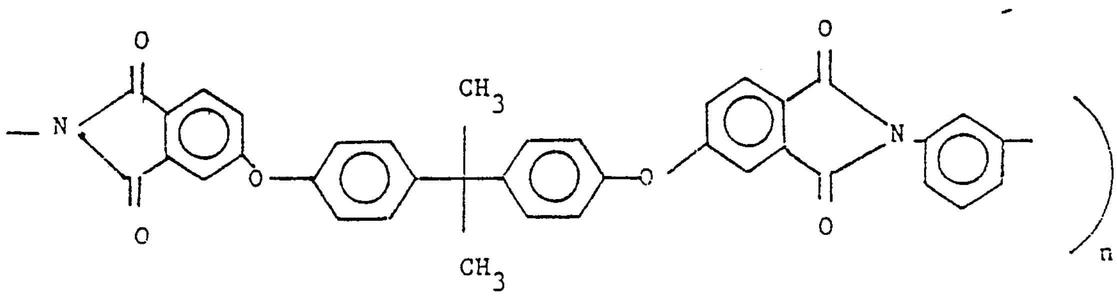

3. Brillengestelle und Teile davon nach Anspruch 1 oder 2, dadurch gekennzeichnet, daß das Polyätherimid eine Glastemperatur von 210 bis 230 °C, vorzugsweise 215 bis 220 °C hat.

4. Brillengestelle und Teile davon nach einem der Ansprüche 1 bis 3, dadurch gekennzeichnet, daß sie nicht verstärkt sind.

5. Brillengestelle und Teile davon nach einem der Ansprüche 1 bis 3, dadurch gekennzeichnet, daß sie mit Glas- oder Kunststoffasern verstärkt sind.

6. Brillengestelle und Teile davon nach einem der vorhergehenden Ansprüche, dadurch gekennzeichnet, daß sie Metallpulver und/oder Farbpigmente enthalten.

7. Brillengestelle und Teile davon nach einem der vorhergehenden Ansprüche, dadurch gekennzeichnet, daß die Oberfläche der Teile eingefärbt oder metallisiert sind.

8. Verwendung von Polyätherimid, insbesondere mit folgender wiederholenden Einheit

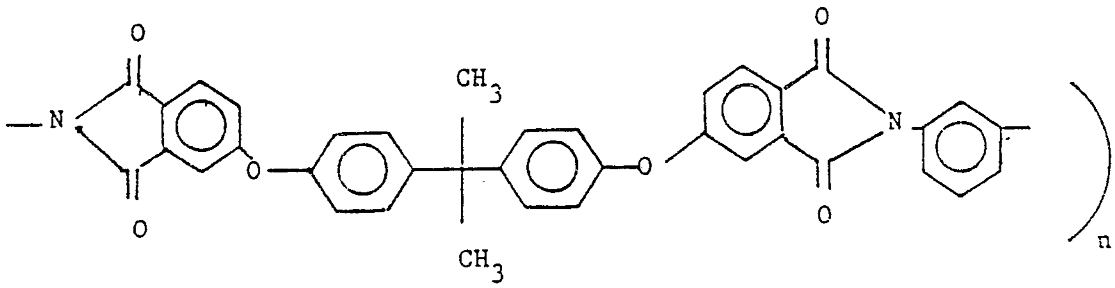

zur Herstellung von Brillengestellen und Teilen davon, insbesondere Bügel, Backen und Brücken, die frei von stützenden Metalleinlagen sind, durch Spritzformung.

**Claims**

1. Spectacle frames and parts thereof of plastic, characterized in that they consist of injection moulded polyether imide and are free from supporting metal inserts.

2. Spectacle frames and parts thereof as claimed in claim 1, characterized in that the polyether imide comprises the following repeating unit :

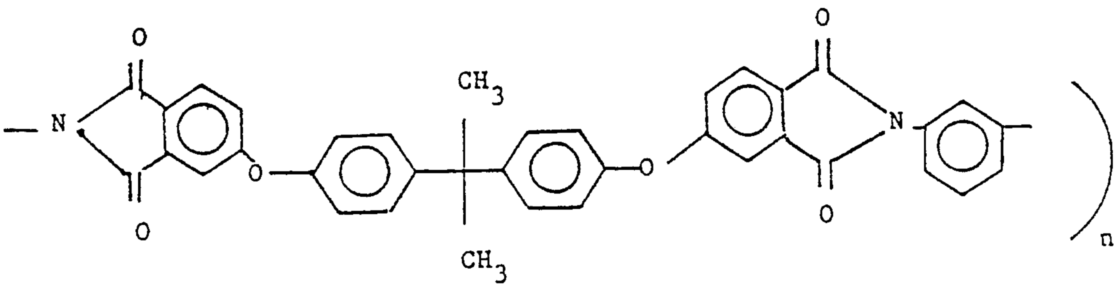

3. Spectacle frames and parts thereof as claimed in claim 1 or 2, characterized in that the polyether imide has a glass transition temperature of from 210 to 230 °C, preferably from 215 to 220 °C.

4. Spectacle frames and parts thereof as claimed in any one of claims 1 to 3, characterized in that they are not reinforced.

5. Spectacle frames and parts thereof as claimed in any one of claims 1 to 3, characterized in that they are reinforced with glass or plastic fibres.

6. Spectacle frames and parts thereof as claimed in any one of the preceding claims, characterized in that they contain metal powder and/or colouring pigments.

7. Spectacle frames and parts thereof as claimed in any one of the preceding claims, characterized in that the surfaces of the parts are coloured or metallized.

8. The use of polyether imide, particularly of polyether imide comprising the following repaeating unit :

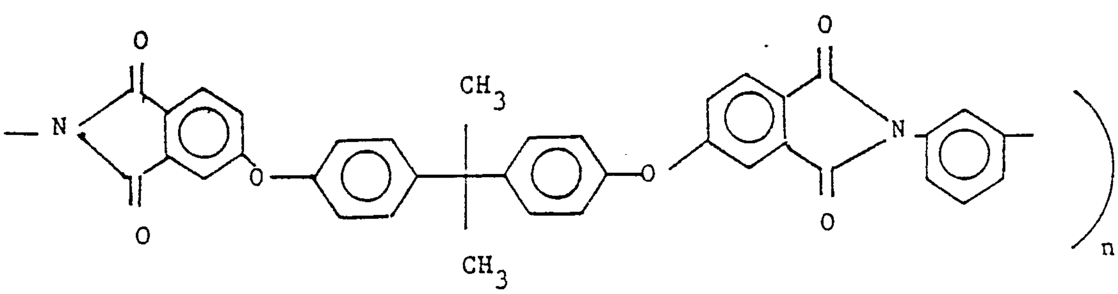

for preparing spectacle frames and parts thereof, particularly temples, flanges and bridges, which are free from supporting metal inserts, by injection moulding.

**Revendications**

1. Montures et accessoires de lunettes en matière plastique, caractérisés en ce qu'ils sont constitués en un polyétherimide moulé par injection et en ce qu'ils ne comprennent pas de garniture intérieure en métal pour les soutenir.

2. Montures et accessoires de lunettes selon la revendication 1, caractérisés en ce que le polyétherimide comprend l'unité suivante qui se répète :

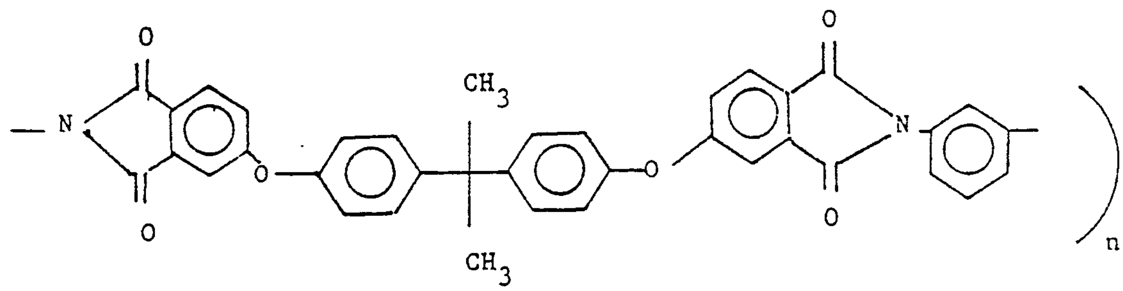

3. Montures et accessoires de lunettes selon la revendication 1 ou 2, caractérisés en ce que le polyétherimide présente une température de verre de 210 à 230 °C et de préférence de 215 à 220 °C.

4. Montures et accessoires de lunettes selon l'une quelconque des revendications 1 à 3, caractérisés en ce qu'ils ne sont pas renforcés.

5. Montures et accessoires de lunettes selon l'une quelconque des revendications 1 à 3, caractérisés en ce qu'ils sont renforcés par des fibres de verre ou de carbone.

6. Montures et accessoires de lunettes selon l'une quelconque des revendications précédentes, caractérisés en ce qu'ils contiennent une poudre métallique et/ou des pigments colorés.

7. Montures et accessoires de lunettes selon l'une quelconque des revendications précédentes, caractérisés en ce que la surface des éléments est colorée ou métallisée.

8. Utilisation de polyétherimide, comprenant notamment l'unité suivante se répétant :

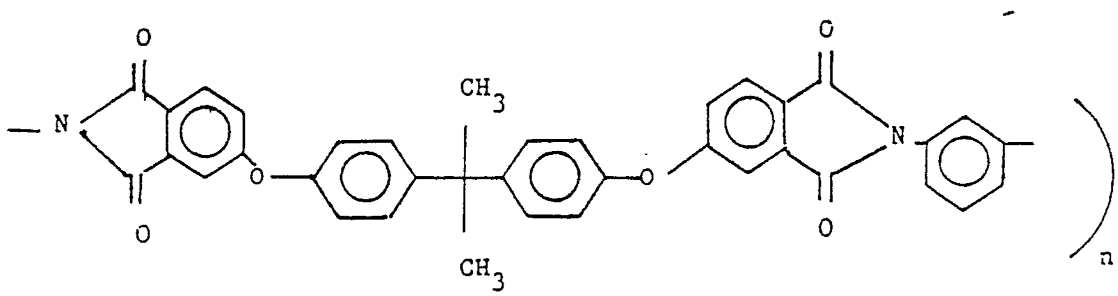

pour la réalisation de montures et accessoires de lunettes, notamment de branches, d'ailettes et de traverses, qui sont exemptes d'une garniture intérieure de renfort en métal, par moulage par injection.